# EUROPEAN PATENT SPECIFICATION

(11) **EP 4 477 203 B1**
(45) Date of publication and mention of the grant of the patent: **04.06.2025**
(21) Application number: 23185981.0
(22) Date of filing: 18.07.2023
(51) Int. Cl.: A61H 19/00, A61H 23/02, A61H 7/00

(54) **LENGTH-ADJUSTABLE MASSAGER BASED ON WIRELESS INDUCTION POWER SUPPLY**
LÄNGENVERSTELLBARES MASSAGEGERÄT AUF BASIS EINER DRAHTLOSEN INDUKTIONSSTROMVERSORGUNG
MASSEUR RÉGLABLE EN LONGUEUR BASÉ SUR UNE ALIMENTATION À INDUCTION SANS FIL

(30) Priority: 15.06.2023 CN 202321522277 U
(43) Date of publication of application: 18.12.2024
(73) Proprietor: Shenzhen Alltokee Technology Co., Ltd, Shenzhen (CN)
(72) Inventor: HUANG, Minyi, Heyuan City (CN)
(74) Representative: Cleanthous, Marinos

(56) References cited:
- CN-U- 216 598 314
- US-A1- 2013 261 385
- US-B1- 9 737 458

## Description

### TECHNICAL FIELD

The present disclosure relates to a length-adjustable massager based on wireless induction power supply.

### BACKGROUND

The statement herein only provides background information related to the present invention and does not necessarily constitute prior art.

As the living standards rise, massage products are becoming more and more popular, and the types of massage products are increasing; In order to match different massage functions, there are also combination massage products on the market; As previously disclosed in Chinese Patent CN216598314U, a combination device allows consumers to combine different second components with the first component to achieve different functional combinations of the entire product.

However, there are also shortcomings in the existing combination device. Specifically, the combination device sets a first conductive member on the first component and a second conductive member on the second component. When the first conductive member contacts the second conductive member, the second component and the first component achieve conduction; Although this method achieves a conductive effect, its conductive members are exposed, and the conductive sheets are made of metal material, which are easy to oxidize and rust. Moreover, there is a current passing through the conductive sheets. Although the current is not high, it still brings discomfort and psychological barriers to consumers, making the market effect of the product not good enough.

For this reason, it is necessary to study a new technical solution to solve the above problems.

CN216598314U disclose a combination device including a first component and a second component, the second component is installed in the first component, the first component is provided with a first working end, the second component along the length direction of the first component to move close to the first working end, the first working end and the distance between the first working end and the second component change.

US 20130261385A1 discloses a sexual stimulation apparatus which may comprise a plurality of light sources for photo stimulation and microbe reduction of the vagina, clitoris, or both; a plurality of vibrators for mechanical stimulation of the vagina, clitoris, or both; a plurality of modes of operation for achieving improved sexual stimulation in a user; a handle for ease of operation; a controller and programmable memory for containing modes of operation and driving the light sources and vibrators of the invention; a vaginal finger; a clitoral finger; a handle for ease of use; a keypad for user entry of commands; a charging and programming port; and a power source which may be a rechargeable battery which may be rechargeable by direct, inductive or other means; and a handle for ease of operation. The invention also comprises a flexible covering that provides smooth sliding engagement with the vagina and clitoris of a user.

### SUMMARY

To address the shortcomings and deficiencies of the prior art mentioned above, the present invention provides a length-adjustable massager based on wireless induction power supply. By setting a wireless charging transmitter module on the rod body and a wireless charging receiver module adapted to it on the massage component, it enables the rod body to supply power for the massage component, solves the deficiency in the prior art of realizing the conductive connection between the massage component and the rod body through wires or conductive sheets, and therefore increases the safety factor and makes the product easier to be accepted by consumers.

To achieve the above objectives, the present invention adopts the following technical solution:

A length-adjustable massager based on wireless induction power supply, comprising a rod body and a massage component that can move back and forth along the lengthwise direction of the rod body; The rod body is provided with a first PCB board, a first massage module, a power supply, and a wireless charging transmitter module; The first massage module, power supply, and wireless charging transmitter module are electrically connected to the first PCB board;

The massage component is provided with a second PCB board, a second massage module, and a wireless charging receiver module, and the second massage module and the wireless charging receiver module are electrically connected to the second PCB board; Moreover, the wireless charging transmitter module on the rod body is adapted to the wireless charging receiver module on the massage component so that the rod body is capable of supplying power to the massage component.

In some embodiments, the rod body has a first mounting chamber, the first massage module is installed in the first mounting chamber, and the first massage module corresponds to the front end of the rod body.

In some embodiments, the massage component has a mounting ring, and the mounting ring is sleeved on the rod body and can slide back and forth on the rod body.

In some embodiments, the wireless charging receiver module is set in the mounting ring.

In some embodiments, the front section of the rod body is in a strip shape, and the mounting ring can slide out of the rod body from the front end of the rod body;

Alternatively, the rear section of the rod body is in a strip shape, and the mounting ring can slide out of the rod body from the rear end of the rod body;

Alternatively, the front and rear sections of the rod body are in a strip shape, and the mounting ring can slide out of the rod body from the front end and back end of the rod body.

In some embodiments, the rear section of the rod body is in a strip shape, and the front section of the rod body extends diagonally with a first massage end.

In some embodiments, the rod body comprises a first plastic inner shell and a first silicone jacket encased on the outside of the first plastic inner shell, and the first mounting chamber is formed inside the first plastic inner shell.

In some embodiments, a holding slot is provided between the first plastic inner shell and the first silicone jacket, and the wireless charging transmitter module is set in the holding slot.

In some embodiments, the first mounting chamber extends along the lengthwise direction of the first plastic inner shell, the power supply is a battery, and the first massage module, battery, and first PCB board are set in sequence from front to back in the first mounting chamber.

In some embodiments, the outer side of the first silicone jacket is provided with massage patterns.

The present invention has obvious advantages and beneficial effects over the prior art. Specifically, the above technical solution is mainly to set a wireless charging transmitter module on the rod body and a wireless charging receiver module adapted to it on the massage component, so that the rod body can supply power to the massage component, which solves the deficiency of the prior art that the massage component and the rod body need to be connected through wires or conductive sheets, making the product factor of safety higher and easier to be accepted by consumers; Furthermore, the massage component can move back and forth on the rod body, thereby adjusting the position of the massage component on the rod body to meet the needs of different consumers.

In order to more clearly illustrate the structural features and functions of the present invention, the following is a detailed description of the present invention in conjunction with the attached figures and specific embodiments.

### BRIEF DESCRIPTION OF DRAWINGS

FIG. 1 shows a three-dimensional schematic diagram of an embodiment of the present invention;
FIG. 2 shows a first exploded schematic diagram of an embodiment of the present invention;
FIG. 3 shows the cross-sectional schematic diagram of an embodiment of the present invention;
FIG. 4 shows a partially enlarged view of FIG.3;
FIG. 5 shows a second exploded schematic diagram of an embodiment of the present invention.

### Description of the key in the drawings:

10. Rod body; 101. First plastic inner shell; 102. First silicone jacket; 103. First massage end; 11. First PCB board; 12. First massage module; 13. Power supply; 14. Wireless charging transmitter module; 20. Massage component; 201. Mounting ring; 202. Second massage end; 203. Second plastic inner shell; 204. Second silicone jacket; 21. Second PCB board; 22. Second massage module; 23. Wireless charging receiver module.

### DETAILED DESCRIPTION OF THE EMBODIMENTS

The following will provide a clear and complete description of the technical solution in this embodiment of the present invention in conjunction with the attached figures, and it is clear that the described embodiment is only a preferred embodiment of the present invention.

It should be noted that when a component is referred to as "fixed to" another component, it may be directly attached to another component or there may be a centered component. When a component is considered to be "connected to" another component, it may be directly connected to another component or there may also be a centered component. The terms "vertical", "horizontal", "left", "right", and similar expressions used in this article are for illustrative purposes only and do not necessarily represent the exclusive implementation method.

Unless otherwise defined, all technical and scientific terms used in this article have the same meanings as those commonly understood by those skilled in the technical field of the present invention. The terms used in the specification of the present invention in this article are only for the purpose of describing specific embodiments and are not intended to limit the present invention. The term "and/or" used in this article includes any and all combinations of one or more related listed items.

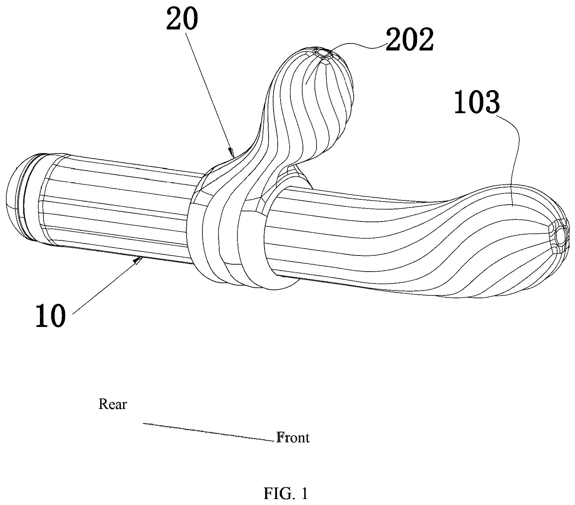

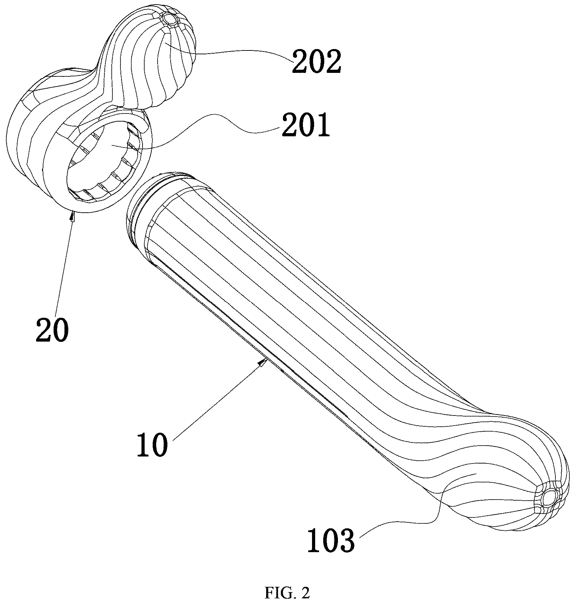

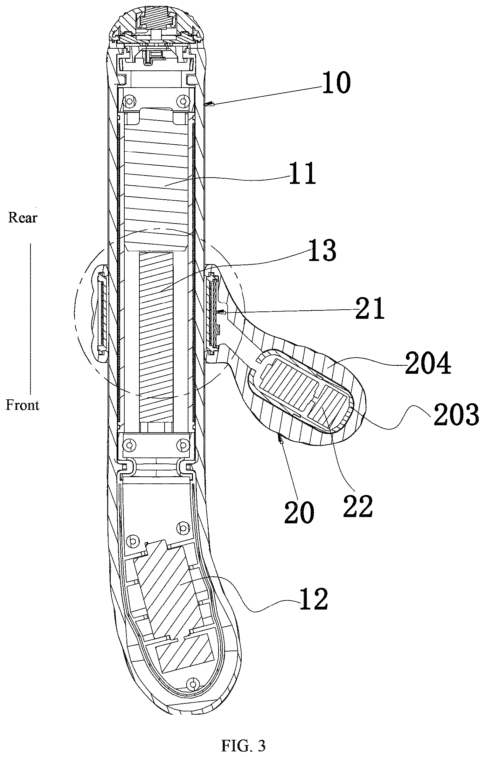

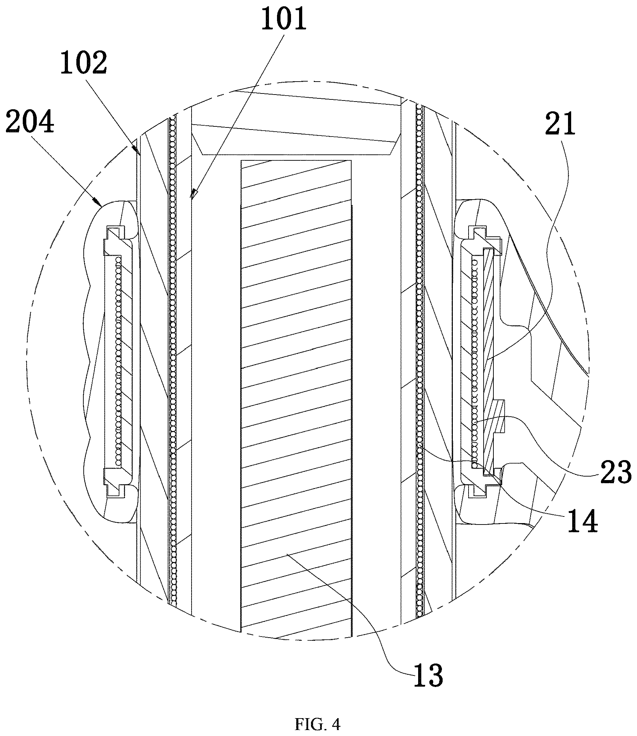

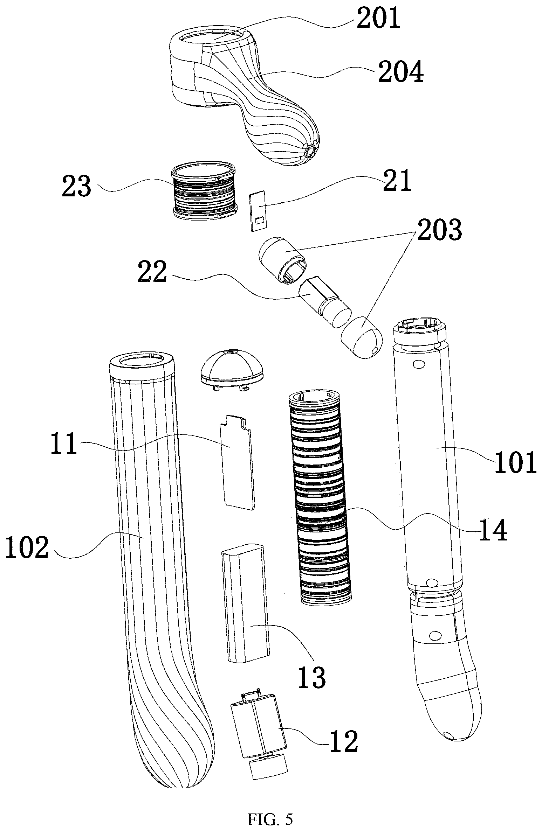

Referring to FIG. 1 to FIG. 5, in the embodiment of the present invention, a length-adjustable massager based on wireless induction power supply comprises a rod body 10 and a massage component 20 that can move back and forth along the lengthwise direction of the rod body 10; The rod body 10 is provided with a first PCB board 11, a first massage module 12, a power supply 13, and a wireless charging transmitter module 14; The first massage module 12, power supply 13, and wireless charging transmitter module 14 are electrically connected to the first PCB board 11;

The massage component 20 is provided with a second PCB board 21, a second massage module 22, and a wireless charging receiver module 23, and the second massage module 22 and the wireless charging receiver module 23 are electrically connected to the second PCB board 21; Moreover, the wireless charging transmitter module 14 is adapted to the wireless charging receiver module 23.

During operation, the wireless charging transmitter module 14 inside the rod body 10 transmits the electrical energy of the power supply 13 (usually a rechargeable battery) to the wireless charging receiver module 23 of the massage component 20 through wireless induction, and the wireless charging receiver module 23 supplies the electrical energy to the second PCB board 21 and the second massage module 22 after receiving the relevant electric energy, so that the second massage module 22 works; In this way, the setting of components such as wires or conductive sheets is omitted, and the problem of leakage caused by exposed wires or conductive sheets can also be avoided, giving a higher sense of safety; Furthermore, the massage component 20 can move back and forth on the rod body 10, thereby adjusting the distance from the front end of the rod body 10 to the massage component 20 to meet the massage needs of different users.

Specifically, the rod body 10 comprises a first plastic inner shell 101 and a first silicone jacket 102 encased on the outside of the first plastic inner shell 101, wherein the first plastic inner shell 101 has a first mounting chamber; Wherein,

The first mounting chamber extends along the lengthwise direction of the first plastic inner shell 101, and the first massage module 12 (provided with a first vibration motor), battery, and first PCB board 11 are set in sequence from front to back in the first mounting chamber; Moreover, the first massage module 12 (the first vibration motor) corresponds to the front end of the first mounting chamber (the rod body 10).

A holding slot is provided between the first plastic inner shell 101 and the first silicone jacket 102, and the wireless charging transmitter module 14 (usually a wireless charging transmission coil) is set in the holding slot, so as to ensure a better sealing and waterproofing of the wireless charging transmitter module 14 while also allowing the wireless charging transmitter module 14 to be closer to the outer surface of the bar body 10, making its connection with the wireless charging receiver module 23 more stable;

The first PCB board 11 is electrically connected with a charging port and an open/close button, and the charging port is preferably set at the rear end of the rod body 10.

Furthermore, the rod body 10 is in a strip shape, and the massage component 20 has a mounting ring 201. The mounting ring 201 is sleeved on the rod body 10, and the mounting ring 201 can slide back and forth on the rod body 10; The wireless charging receiver module 23 is preferably set on the mounting ring 201.

In practical application, a rod body 10 is provided with several massage components 20 with different functions (such as a suction massage component 20, a vibration massage component 20, a tapping massage component 20, etc.). In order to achieve interchangeability of massage components 20, the front section of the rod body 10 can be set in a strip shape, so that the mounting ring 201 can slide out of the rod body 10 from the front end of the rod body 10; Alternatively, the rear section of the rod body 10 is set in a strip shape, and the mounting ring 201 can slide out of the rod body 10 from the rear end of the rod body 10; Alternatively, the front and rear sections of the rod body 10 are both set in a strip shape, and the mounting ring 201 can slide out the rod body 10 from the front end and back end of the rod body 10;

As a preferred embodiment, the rear section of the rod body 10 in this embodiment is in a strip shape, and the front section of the rod body 10 extends diagonally with a first massage end 103.

Furthermore, in this embodiment, the massage component 20 extends diagonally forward on the mounting ring 201 with a second massage end 202, and the second massage module 22 corresponds to the second massage end 202 (the second massage module 22 has a second vibration motor, and the second vibration motor corresponds to the second massage end 202); Specifically, the second massage component 20 has a second plastic inner shell 203 and a second silicone jacket 204 set on the outer side of the second plastic inner shell 203, and the second massage module 22 is set inside the second plastic inner shell 204.

Preferably, the outer surfaces of the first silicone jacket 102 and the second silicone jacket 204 are both provided with massage patterns.

The design focus of the present invention is to set a wireless charging transmitter module on the rod body and a wireless charging receiver module adapted to it on the massage component, so that the rod body can supply power to the massage component, which solves the deficiency of the prior art that the massage component and the rod body need to be connected through wires or conductive sheets, making the product factor of safety higher and easier to be accepted by consumers; Furthermore, the massage component can move back and forth on the rod body, thereby adjusting the position of the massage component on the rod body to meet the needs of different consumers.

## Claims

1. A length-adjustable massager based on wireless induction power supply, comprising a rod body (10) and a massage component (20) that can move back and forth along the lengthwise direction of the rod body (10); the rod body (10) is provided with a first PCB board (11), a first massage module (12), and a power supply (13); the first massage module (12) and the power supply (13) are electrically connected to the first PCB board (11);
the massage component (20) is provided with a second PCB board (21) and a second massage module (22),
the length-adjustable massager based on wireless induction power supply is characterized that, the rod body (10) is provided with a wireless charging transmitter module (14) electrically connected to the first PCB board (11); the massage component (20) is provided with a wireless charging receiver module (23) electrically connected to the second PCB board (21); and the wireless charging transmitter module on the rod body (14) is adapted to the wireless charging receiver module on the massage component (23) so that the rod body (10) is capable of supplying power to the massage component (20).

2. The length-adjustable massager based on wireless induction power supply of claim 1, **characterized in that**, the rod body (10) has a first mounting chamber, the first massage module (12) is installed in the first mounting chamber, and the first massage module (12) corresponds to a front end of the rod body (10).

3. The length-adjustable massager based on wireless induction power supply of claim 1, **characterized in that**, the massage component (20) has a mounting ring (201), and the mounting ring (201) is sleeved on the rod body (10) and can slide back and forth on the rod body (10).

4. The length-adjustable massager based on wireless induction power supply of claim 3, **characterized in that**, the wireless charging receiver module (23) is set in the mounting ring (201).

5. The length-adjustable massager based on wireless induction power supply of claim 3, **characterized in that**, a front section of the rod body (10) is in a strip shape, and the mounting ring (201) can slide out of the rod body (10) from the front end of the rod body (10);
or, the rear section of the rod body (10) is in a strip shape, and the mounting ring (201) can slide out of the rod body (10) from the rear end of the rod body (10);
or, the front and rear sections of the rod body (10) are in a strip shape, and the mounting ring (201) can slide out of the rod body (10) from the front end and back end of the rod body (10).

6. The length-adjustable massager based on wireless induction power supply of claim 5, **characterized in that**, the rear section of the rod body (10) is in a strip shape, and the front section of the rod body (10) extends diagonally with a first massage end (103).

7. The length-adjustable massager based on wireless induction power supply of claim 2, **characterized in that**, the rod body (10) comprises a first plastic inner shell (101) and a first silicone jacket (102) encased on the outside of the first plastic inner shell (101), and the first mounting chamber is formed inside the first plastic inner shell (101).

8. The length-adjustable massager based on wireless induction power supply of claim 7, **characterized in that**, a holding slot is provided between the first plastic inner shell (101) and the first silicone jacket (102), and the wireless charging transmitter module (14) is set in the holding slot.

9. The length-adjustable massager based on wireless induction power supply of claim 7, **characterized in that**, the first mounting chamber extends along the lengthwise direction of the first plastic inner shell (101), the power supply (13) is a battery, and the first massage module (12), battery, and first PCB board (11) are set in sequence from front to back in the first mounting chamber.

10. The length-adjustable massager based on wireless induction power supply of claim 7, **characterized in that**, the outer side of the first silicone jacket (102) is provided with massage patterns.

## Patentansprüche

1. Längenverstellbares Massagegerät auf Basis einer drahtlosen Induktionsstromversorgung, umfassend einen Stabkörper (10) und eine Massagekomponente (20), die sich entlang der Längsrichtung des Stabkörpers (10) vor- und zurückbewegen kann; wobei der Stabkörper (10) mit einer ersten Leiterplatte (11), einem ersten Massagemodul (12) und einer Stromversorgung (13) versehen ist; wobei das erste Massagemodul (12) und die Stromversorgung (13) elektrisch mit der ersten Leiterplatte (11) verbunden sind;
Wobei die Massagekomponente (20) mit einer zweiten Leiterplatte (21) und einem zweiten Massagemodul (22) versehen ist,
**dadurch gekennzeichnet, dass** der Stabkörper (10) mit einem drahtlosen Ladesendemodul (14) versehen ist, das elektrisch mit der ersten Leiterplatte (11) verbunden ist; wobei die Massagekomponente (20) mit einem drahtlosen Ladeempfangsmodul (23) versehen ist, das elektrisch mit der zweiten Leiterplatte (21) verbunden ist; und wobei das drahtlose Ladesendemodul am Stabkörper (14) an das drahtlose Ladeempfangsmodul an der Massagekomponente (23) angepasst ist, so dass der Stabkörper (10) in der Lage ist, die Massagekomponente (20) mit Strom zu versorgen.

2. Längenverstellbares Massagegerät auf Basis einer drahtlosen Induktionsstromversorgung nach Anspruch 1, **dadurch gekennzeichnet, dass** der Stabkörper (10) eine erste Montagekammer aufweist, wobei das erste Massagemodul (12) in der ersten Montagekammer installiert ist und das erste Massagemodul (12) einem vorderen Ende des Stabkörpers (10) entspricht.

3. Längenverstellbares Massagegerät auf Basis einer drahtlosen Induktionsstromversorgung nach Anspruch 1, **dadurch gekennzeichnet, dass** die Massagekomponente (20) einen Montagering (201) aufweist, und wobei der Montagering (201) auf dem Stabkörper (10) aufgeschoben ist und auf dem Stabkörper (10) hin und her gleiten kann.

4. Längenverstellbares Massagegerät auf Basis einer drahtlosen Induktionsstromversorgung nach Anspruch 3, **dadurch gekennzeichnet, dass** das drahtlose Ladeempfangsmodul (23) in den Montagering (201) eingesetzt ist.

5. Längenverstellbares Massagegerät auf Basis einer drahtlosen Induktionsstromversorgung nach Anspruch 3,**dadurch gekennzeichnet, dass** ein vorderer Abschnitt des Stabkörpers (10) streifenförmig ist und der Montagering (201) aus dem Stabkörper (10) vom vorderen Ende des Stabkörpers (10) herausgleiten kann; oder dass der hintere Abschnitt des Stabkörpers (10) streifenförmig ist und der Montagering (201) vom hinteren Ende des Stabkörpers (10) aus dem Stabkörper (10) herausgleiten kann;
oder dass die vorderen und hinteren Abschnitte des Stabkörpers (10) streifenförmig sind und der Montagering (201) vom vorderen und hinteren Ende des Stangenkörpers (10) aus dem Stangenkörper (10) herausgleiten kann.

6. Längenverstellbares Massagegerät auf Basis einer drahtlosen Induktionsstromversorgung nach Anspruch 5, **dadurch gekennzeichnet, dass** der hintere Abschnitt des Stabkörpers (10) streifenförmig ist und sich der vordere Abschnitt des Stabkörpers (10) diagonal mit einem ersten Massageende (103) erstreckt.

7. Längenverstellbares Massagegerät auf Basis einer drahtlosen Induktionsstromversorgung nach Anspruch 2, **dadurch gekennzeichnet, dass** der Stabkörper (10) eine erste Kunststoffinnenschale (101) und einen ersten Silikonmantel (102) umfasst, der auf der Außenseite der ersten Kunststoffinnenschale (101) ummantelt ist, und wobei die erste Montagekammer innerhalb der ersten Kunststoffinnenschale (101) ausgebildet ist.

8. Längenverstellbares Massagegerät auf Basis einer drahtlosen Induktionsstromversorgung nach Anspruch 7, **dadurch gekennzeichnet, dass** ein Halteschlitz zwischen der ersten Kunststoffinnenschale (101) und dem ersten Silikonmantel (102) vorgesehen ist und das drahtlose Ladesendemodul (14) in den Halteschlitz eingesetzt ist.

9. Längenverstellbares Massagegerät auf Basis einer drahtlosen Induktionsstromversorgung nach Anspruch 7, **dadurch gekennzeichnet, dass** die erste Montagekammer sich entlang der Längsrichtung der ersten Kunststoffinnenschale (101) erstreckt, wobei die Stromversorgung (13) eine Batterie ist, und wobei das erste Massagemodul (12), die Batterie und die erste Leiterplatte (11) nacheinander von vorne nach hinten in die erste Montagekammer eingesetzt sind.

10. Längenverstellbares Massagegerät auf Basis einer drahtlosen Induktionsstromversorgung nach Anspruch 7, **dadurch gekennzeichnet, dass** die Außenseite des ersten Silikonmantels (102) mit Massagemustern versehen ist.

## Revendications

1. Masseur réglable en longueur basé sur une alimentation électrique à induction sans fil, comprenant un corps de tige (10) et un composant de massage (20) qui peut se déplacer d'avant en arrière dans la direction longitudinale du corps de tige (10) ; dans lequel le corps de tige (10) est pourvu d'une première carte PCB (11), d'un premier module de massage (12) et d'une alimentation électrique (13) ; le premier module de massage (12) et l'alimentation électrique (13) sont électriquement connectés à la première carte PCB (11) ;
le composant de massage (20) est pourvu d'une seconde carte PCB (21) et d'un second module de massage (22),
le masseur réglable en longueur basé sur une alimentation électrique à induction sans fil est **caractérisé en ce que**, le corps de tige (10) est pourvu d'un module émetteur de charge sans fil (14) connecté électriquement à la première carte PCB (11) ; le composant de massage (20) est pourvu d'un module récepteur de charge sans fil (23) connecté électriquement à la seconde carte PCB (21) ; et le module émetteur de charge sans fil sur le corps de tige (14) est adapté au module récepteur de charge sans fil sur le composant de massage (23) de sorte que le corps de tige (10) est capable d'alimenter le composant de massage (20).

2. Masseur réglable en longueur basé sur une alimentation électrique à induction sans fil selon la revendication 1, **caractérisé en ce que**, le corps de tige (10) a une première chambre de montage, le premier module de massage (12) est monté dans la première chambre de montage, et le premier module de massage (12) correspond à une extrémité avant du corps de tige (10).

3. Masseur réglable en longueur basé sur une alimentation électrique à induction sans fil selon la revendication 1, **caractérisé en ce que**, le composant de massage (20) a une bague de montage (201), et la bague de montage (201) est manchonné sur le corps de tige (10) et peut glisser d'avant en arrière sur le corps de tige (10).

4. Masseur réglable en longueur basé sur une alimentation électrique à induction sans fil selon la revendication 3, **caractérisé en ce que**, le module récepteur de charge sans fil (23) est disposé dans la bague de montage (201).

5. Masseur réglable en longueur basé sur une alimentation électrique à induction sans fil selon la revendication 3, **caractérisé en ce que**, une section avant du corps de tige (10) est en forme de bande, et la bague de montage (201) peut glisser hors du corps de tige (10) à partir de l'extrémité avant du corps de tige (10) ;
ou, la section arrière du corps de tige (10) est en forme de bande, et la bague de montage (201) peut glisser hors du corps de tige (10) à partir de l'extrémité arrière du corps de tige (10) ;
ou, les sections avant et arrière du corps de tige (10) sont en forme de bande, et la bague de montage (201) peut glisser hors du corps de tige (10) à partir de l'extrémité avant et de l'extrémité arrière du corps de tige (10).

6. Masseur réglable en longueur basé sur une alimentation électrique à induction sans fil selon la revendication 5, **caractérisé en ce que**, la section arrière du corps de tige (10) est en forme de bande, et la section avant du corps de tige (10) s'étend en diagonale avec une première extrémité de massage (103).

7. Masseur réglable en longueur basé sur une alimentation électrique à induction sans fil selon la revendication 2, **caractérisé en ce que**, le corps de tige (10) comprend une première coque interne en plastique (101) et une première gaine en silicone (102) encastrée à l'extérieur de la première coque interne en plastique (101), et la première chambre de montage est formée à l'intérieur de la première coque interne en plastique (101).

8. Masseur réglable en longueur basé sur une alimentation électrique à induction sans fil selon la revendication 7, **caractérisé en ce que**, une fente de retenue est prévue entre la première coque interne en plastique (101) et la première gaine en silicone (102), et le module émetteur de charge sans fil (14) est disposé dans la fente de retenue.

9. Masseur réglable en longueur basé sur une alimentation électrique à induction sans fil selon la revendication 7, **caractérisé en ce que**, la première chambre de montage s'étend le long de la direction longitudinale de la première coque interne en plastique (101), l'alimentation électrique (13) est une batterie, et le premier module de massage (12), la batterie et la première carte PCB (11) sont disposés en séquence d'avant en arrière dans la première chambre de montage.

10. Masseur réglable en longueur basé sur une alimentation électrique à induction sans fil selon la revendication 7, **caractérisé en ce que**, le côté externe de la première gaine en silicone (102) est pourvu de motifs de massage.
